# EUROPEAN PATENT APPLICATION

(11) **EP 2 708 572 A1**
(43) Date of publication of application: **19.03.2014**
(21) Application number: 13183940.9
(22) Date of filing: 11.09.2013
(51) Int. Cl.: C08J 5/24, B32B 5/26

(54) **UV Curing System and Method for Wind Blade Manufacture and Repair**

(30) Priority: 14.09.2012 US 201213619154
(71) Applicant: General Electric Company, Schenectady, New York 12345 (US)
(72) Inventor: Fang, Xiaomei, Niskayuna, NY New York 12309 (US); Seeger, Jordan P., Niskayuna, NY New York 12309 (US)
(74) Representative: Bedford, Grant Richard

(57) **Abstract**

A UV curing system 130 and method 150 for manufacture and repair of composite parts, such as for use in wind blade manufacture and repair is disclosed. The system 130 and method 150 utilize UV as the single radiation source to cure laminates 112 such as glass fiber reinforced laminates containing a photo initiator. The use of Co naphthenate or phenoxyethyl methacrylate in the curing of thick laminates 112 produces high glass transition and complete curing of thick laminates 112. The addition of cobalt naphthenate and phenoxyethyl methacrylate shows no significant reduction on the bonding strength.

## Description

Curing methods for composite materials are disclosed, particularly, ultraviolet (UV) curing methods for use in manufacture and/or repair of structural composite products such as wind turbine rotor blade laminates.

Wind turbines have received increased attention as environmentally safe and relatively inexpensive alternative energy sources. With this growing interest, considerable efforts have been made to develop manufacture and repair techniques for wind turbines that are reliable, efficient, and cost effective.

A wind turbine includes a rotor that has multiple blades. The rotor is mounted to a housing or nacelle that is positioned on top of a truss or tubular tower. Utility grade wind turbines (i.e., wind turbines designed to provide electrical power to a utility grid) can have large rotors of 30 or more meters in length and generally have an average wind turbine rotor blade length of 24 meters to 47 meters. In addition, the wind turbines are typically mounted on towers that are at least 60 meters in height. Blades on these rotors transform wind energy into a rotational torque or force that drives one or more generators. Wind turbine rotor blade designs have become increasingly complex to maximize aerodynamic properties and to withstand a variety of environments and conditions.

Generally, wind turbine rotor blades are fabricated from composite fiber materials and matrices composed of multiple layers or plies. In many instances, if certain material failures occur in the wind turbine rotor blade, the wind turbine is taken off-line and the wind turbine rotor blade replaced or repaired. The cost and time associated with transportation of replacement rotor blades and their installation is very high. Current methods used to repair wind turbine rotor blades are time and labor intensive and require special repair methods and facilities. Consequently, fabrication and repair of wind turbine rotor blades is difficult and expensive.

A conventional approach utilized in both manufacture and repair of wind turbine blades involves curing multiple layers together at the same time in an autoclave or oven. The process entails applying the layers upon each other, and then curing all of the layers at the same time. Although adhesion between layers is generally good, other disadvantages can make this approach impractical. For instance, in manufacture or repair of the root section of a wind turbine blade, sagging and dimensional distortion and fiber wrinkling during compaction may occur during the curing cycle. Also, excessive reaction exotherm from thick parts may cause problems during curing.

Another approach for curing of these multiple layers involves sequentially applying and completely curing layers one after another using a single curing mechanism. In other words, a first composite layer is cured completely before laying down a second composite layer. The second composite layer is then cured completely before laying down a third composite layer. The process adds additional composite layers in the same sequential manner using the single curing mechanism. Unfortunately, this fabrication technique creates relatively weak secondary adhesive bonds between the composite layers. These secondary adhesive bonds result in undesirably low interlaminar strength.

In alternate situations, in-field repair including up-tower repair is feasible. In these situations, a thermal blanket heating process may be utilized. This process requires a green cure and an extended long thermal curing process to achieve desired physical and mechanical properties. The up-tower time required for the long thermal curing process contributes significant man-hour cost to wind blade repair processes.

UV curing may provide faster laminate curing as an efficient in-field repair process. However, UV curing processes alone have been limited to thin laminate curing or require use of additional initiators and/or heating steps such as by use of external thermal radiation sources.

A need therefore exists for an improved technique to provide fast, cost effective UV curing of thick multilayer composites without significant decay in the extent of cure of the inner layers of the composites. A further need exists for excellent glass transition temperatures in layers of thick multilayer composites without use of thermal initiators and/or use of additional thermal heating by external thermal sources. According to the present invention a system and method for manufacture and repair of multilayer composites is disclosed. The system includes a composite structure that employs a layer of a UV curable composition that includes a UV curable vinyl ester resin, a metal carboxylate accelerator, an adhesion promoter, and a trialkyl substituted benzoyl substituted aromatic phosphine oxide photoinitiator. The method entails forming a stack of a plurality of layers of fiber and/or filler reinforced UV curable resin composition. An UV radiation source is employed to cure the stack of layers through a thickness of the plurality of layers without use of thermal energy from an external source.

The UV curable composition employed includes a photoinitiator and one more cure additives. The cure additives include a metal carboxylate accelator, an adhesion promotor such as one or more acylate monomers, methacylate monomers or mixtues thereof, and a trialkyl substituted benzoyl substituted aromatic phosphine oxide UV photoinitiator that enables curing of multiple layers without the use of thermal initiator and/or heating by additional external thermal sources such as thermal blankets or ovens.

The disclosed UV cure system and method enables cure of layers in thick multilayer composites without significant decay in the extent of cure throughout the multiple layers of the composites. The disclosed UV cure system and method enables rapid, cost effective curing and improved curing throughout the layers in thick multilayer composites as may be required for wind blade repair, especially for up-tower repair.

Various aspects and embodiments of the present invention will now be described in connection with the accompanying drawings, in which:
FIG. 1 illustrates a UV cure manufacturing and repair system in accordance with an embodiment disclosed herein;
FIG 2 illustrates effects of cure additives on glass transition temperatures;
FIG 3 illustrates effects of cure additives on shear strength;
FIG. 4 illustrates an exemplary embodiment of a composite structure used in a wind turbine system having blades manufactured or repaired with a UV curable composition in accordance with certain embodiments disclosed herein;
FIG. 5 illustrates blades manufactured or repaired for use in a the wind turbine system such as that shown in FIG. 4
FIG. 6 illustrates a method of curing a composite structure in accordance with certain embodiments of the present invention.

UV curable compositions are disclosed that may be cured without a thermal initiator and/or without thermal heating step(s). Despite absence of a thermal initiator and/or additional thermal heating steps, complete curing of composite materials, that is 90% or more curing, can be attained.

The UV curable compositions may be employed to enable rapid and thorough curing of composite structures to reduce manufacturing or repair cycle time, reduce plant and equipment investment, and decrease cost in manufacture and repair of a composite part. The UV curable compositions may be employed in a system and method disclosed herein for manufacture or repair of composite structures such as fiber reinforced resin structures.

Embodiments presented herein provide an UV cure manufacture and repair system for composite structures and a method of manufacture and repair of a composite structure that employs a UV cure system.

A composite structure as used herein is understood to mean a structure that has one or more composite layers, or plies. A composite structure may be manufactured and/or repaired using a UV curable resin composition. The UV curable resin composition may be employed to bond multiple composite layers. A composite layer includes one or more of filler, fiber or mixture thereof, a UV curable monomer or a UV curable reinforced resin that has a reactive group, and an UV curable composition described hereafter.

In the specification and the claims that follow, singular forms "a", "an" and "the" include plural referents unless the context clearly dictates otherwise.

The UV curable composition and UV curing mode used in the UV cure system and method of manufacture and repair may achieve uniform curing through multiple layers, may create covalent bonds across interfaces of the multiple layers, and may achieve high glass transition temperatures across the multiple layers without use of thermal energy such as that from an external thermal energy source.

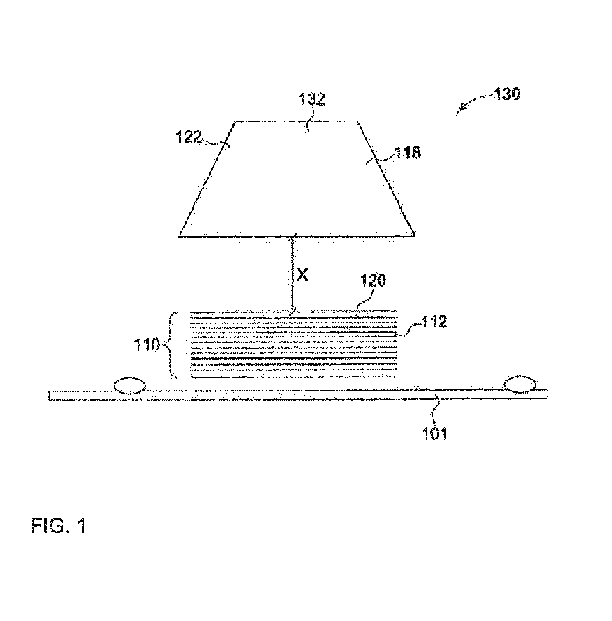

FIG. 1 is a diagrammatical illustration of an exemplary embodiment of the ultraviolet (UV) cure manufacturing and repair system 130 in accordance with an embodiment disclosed herein. Composite structure 110 is shown as having a plurality of layers, or plies 112 of a UV curable composition reinforced with fiber or another material wherein the plurality of plies 112 are positioned on substrate 101. Plies 112 are positioned below UV radiation source 132 by distance X. Radiation source 132 may include a plurality of UV sources such as UV sources 118 and 132. In alternative embodiments, composite structure 110 may include two or more layers, or plies, of another type of material.

### UV Curable Composition

UV curable compositions employed herein advantageously can be cured by UV radiation without use of thermal energy from an external thermal source. The UV curable compositions include one or more photoinitiators that can generate free radicals when exposed to UV radiation of wavelength at which the photoinitiator is active. The UV curable compositions also contain one or more cure additives. Thick multilayer composites such as those that have a thickness of about 0.125 inches or more that employ the UV curable compositions may be cured without significant decay in the extent of cure through the layers of the composites. Multilayer composites that include the UV curable compositions can achieve uniform curing under UV radiation. Uniform curing may be achieved such as by creation of strong covalent bonds across interfaces of multiple layers and/or by creation of high glass transition temperatures across multiple layers of thick composites.

### Cure Additives

Cure additives which may be employed in the UV curable composiotns include but are not limted to accelarators, adhesion promoters and mixtures threof. Accelarators that may be employed include but are not limited to cobalt promoters such as cobalt napthenate, cobalt octoate and mixtures thereof; aromatic amines such as dimethylaniline, diethylaniline and mixtures thereof, and mixtures of cobalt promoters and aromatic amines.

Where Co promoters are employed as accelerators, Co promoters such as Co napthenate (6% solution) may be present in the UV curable composition in an amount of about 0.05% to about 5 %, preferably about 0.1 % to about 2 %, more preferably about 0.2 % to about 1 % where all amounts are based on the weight of the UV curable resin.

Where aromatic amines are employed as accelerators, an aromatic amine such as dimethylaniline may be present in the UV curable composition in an amount of about 0.01 % to about 5 %, preferably about 0.02% to about 2%, more preferably about 0.05% to about 1% where all amounts are based on the weight of the UV curable resin.

Where mixtures of accelerators such as one or more Co promoters such as one or more of cobalt napthenate and cobalt octoate are employed together with one or more aromatic amines such as dimethylaniline and diethylaniline as accelerators, the Co promoter (6% solution) may be present in the mixture in an amount of about 5% to about 95%, preferably about 15% to about 75%, more preferably about 40% to about 60% remainder aromatic amine, where all amounts are based on the total weight of the mixture of Co promoter and aromatic amine.

Where mixtures of Co promoter and aromatic amine are employed as accelerators, the mixture may be present in a UV curable composition in an amount of about 0.06% to about 10%, preferably about 0.1 % to about 4%, more preferably about 0.2% to about 2% where all amounts are based on the weight of the UV curable resin.

Cure additives in the form of accelerators may be present in the UV curable composition in an amount of about 0.05 % to about 10 %, preferably about 0.1 % to about 5%, more preferably about 0.2% to about 2 % by weight based on the weight of the UV curable resin component or UV curable monomer component of the UV curable composition.

Cure additives in the form of adhesion promoters that may be employed in the UV curable composition include but are not limited to alkyl phenoxy methacrylates such as phenoxyethyl methacrylate such as SR 340 from Sartomer Inc., butanediol dimethacrylates such as SR214 from Sartomer Inc., neopentyl glycol dimethacrylate such as SR248 from Sartomer Inc., ethoxylated bisphenol A dimethacrylate such as SR348 from Sartomer Inc., hexanediol dimethacrylate such as SR239 from Sartomer Inc., and mixtures thereof. Other acrylate and/or methacrylate monomers that may be employed as adhesion promoters include but are not limited to acrylate and/or methacrylate monomers such as those described in Olson, Pub US Application 20090229747, the teachings of which are incorporated by reference herein by their entirety.

### Photoinitiators

The term "photoinitiator" as used herein is understood to mean a chemical compound that decomposes into free radicals when exposed to light but does not function as a thermal initiator.

Photoinitiators that may be used in UV curable compositions such as those disclosed herein include but are not limited to quinones, benzophenones, nitroso compounds, acryl halides, hydrazones, mercapto compounds, pyrylium compounds, triacrylimidazoles, bisimidazoles, chloroalkyltriazines, benzoin ethers, benzil ketals, thioxanthones, acetophenones, acylphosphine oxides, derivatives of the aforementioned compounds, and mixtures thereof. Exemplary photoinitiators include benzil ketals such as 2,2-dimethoxy-2-phenyl acetophenone from Ciba Specialty Chemicals; acetophenone derivatives such as 2,2-diethoxyacetophenone ("DEAP" from First Chemical Corporation); 2-hydroxy-2-methyl-1-phenyl-propan-1-one ("HMPP" from Ciba Specialty Chemicals under the trademark DAROCUR™ 1173); 2-benzyl-2-N, N-dimethylamino-1- (4-morpholinophenyl)-1-butanone from Ciba Specialty Chemicals; 2-methyl-1-(4-(methylthio)phenyl)-2-morpholinopropan-1-one from Ciba Specialty Chemicals; acylphosphine oxides such as 2,4,6-trimethylbenzoyl diphenylphosphine oxide ("TPO"), bis(2,6-dimethoxybenzoyl)-2,4,4-trimethylpentylphosphine oxide ("DMBAPO"), or bis(2,4,6-trimethylbenzoyl)-phenylphosphine oxide ("BTBPPO"). BTBPPO is available from Ciba Specialty Chemicals; DMBAPO is available from Ciba Specialty Chemicals in the form of blends with other ketones including: 25/75 wt. % blend with HMPP and 1-hydroxy-cyclohexyl-phenyl-ketone, (or HCPK). TPO is also available from Ciba Specialty Chemicals in 50/50 wt. % blends with HMPP. In a preferred embodiment the photoinitiators used are acylphosphine oxide type such as IRIGACURE ® 819 from Ciba Specialty Chemicals.

Photoinitiators may be employed in an amount of about 0.01% to about 20%, preferably about 0.1% to about 10%, more preferably about 0.1% to about 5% by weight, based on the weight UV curable resin.

The UV cure method according to various aspects of the present invention may be employed with UV curable resin compositions such as those that are free of thermal initiators. The UV cure method may be employed without use of an external thermal radiation source that might impart thermal heating to any of the layers before, during or after UV curing step or steps.

It has been discovered that the use of photoinitiators in combination with at least one of the cure additives disclosed herein may enable uniform curing of the layers of a multi-layer composite structure throughout the thickness of the composite structure without use of thermal energy from an external thermal energy source. High glass transition temperatures in a plurality of layers of the composite structure may be achieved with strong secondary bonding and without significant decay in bonding strength among the layers.

### Reactive Resin Description

As used herein, "resin" is understood to include a resin or a resin blend. The resin may include a reactive group.

As used herein, the term "reactive group" is understood to mean an atom or a group of atoms in an organic compound that provides the compound with characteristics which cause the compound to respond to a specific curing mechanism. Non-limiting examples of reactive groups include aldehydes, amines, hydroxyl, acrylate, methacrylate, vinyl, cyclo-epoxide, glycidyl etherepoxide with amine curatives, urethane, thiol-ene reactive group or a combination thereof. Some non-limiting examples of resins that include one or more of these reactive groups are unsaturated polyesters, vinyl esters, melamines, urea-formaledehydes, phenolics, methacrylates, acrylates, epoxies, urethanes, etc.

### Description Of Fiber Reinforced Resin

In FIG. 1, a plurality of layers 112 of a reinforced resin composite material are disposed in a stacked configuration and may be bonded by a covalent bond formed between adjacent layers 112 of composite material during curing to UV radiation without use of externally applied thermal energy to form composite structure 110. In particular embodiments, layers 112 include a reinforcing fiber or filler, such as, but not limited to high strength fibers such as E-glass and S-glass fibers. The reinforcing capability of the fibers, filler and combinations thereof may be increased by techniques known in the art, such as, but not limited to, forming a plurality of layers or plies, orientation of fibers in a selected direction, and like methods. The reinforcing fibers may be used in any conventional form such as braided, unidirectional, woven fabric, knitted fabric, swirl fabric, felt mat, wound, and the like. Exemplary fibers that may be used include but are not limited to glass fibers such as quartz, E-glass, S-2 glass, R-glass from suppliers such as PPG, AGY, St. Gobain, Owens-Corning, or Johns Manville. The fibers typically are at least partially UV transparent fibers such as but not limited to compositions of glass, quartz, silica, fumed silica, alumina, zirconia and the like. Nanoparticles of these compositions also may be employed as fillers, alone or in admixture with fibers. Mixtures of fibers also may be employed. Reinforcing fiber is typically present in the UV curable resin composition of a composite material in an amount of about 1% to about 85% by weight, more typically in an amount of about 10% to about 80% by weight, based on the weight of the UV curable composition. More preferably, reinforcing fiber may be present in an amount of about 45% to about 75% by weight based on the weight of the UV curable composition.

In a non-limiting example, a plurality of layers 112 of a composite material may include a plurality of fibers that form at least one composite fabric ply that includes a UV curable monomer or UV curable resin material. A UV curable monomer or resin may be applied to a fabric ply such as a glass fabric ply by pre-impregnating the UV curable monomer or resin into the fabric layer (e.g., pre-preg fabric). Inpregnating may be performed by infusing the UV curable monomer or resin into the fabric layer by vacuum-assisted resin transfer molding (VaRTM), resin transfer molding (RTM), or the like, or by brushing or rolling the UV curable monomer or resin onto the surface of the fabric layer until the resin material is absorbed.

### Description Of UV Curable Resin Compositions

In some embodiments, a plurality of layers 112 of a composite material include UV curable resins that have at least one reactive group, including but not limited to at least one ethylenic unit, cyclic ether unit, or epoxide unit, oxetane unit, or the like, or combinations thereof. In other embodiments, the UV curable resins have at least one isocyanate unit, ester unit, or the like, or combinations thereof. Suitable UV curable resin materials include but are not limited to unsaturated polyesters such as POLYLITE® polyester resin available from Reichhold, SYNOLITE® polyester resin available from DSM, AROPOL® polyester resin available from Ashland; vinyl esters such as DION 9102-70, NORPOL® and HYDREX® resins available from Reichhold, DERAKANE®, DERAKANE MOMENTUM® and HETRON® resins available from Ashland, ATLAC E-NOVA® resin available from DSM and the like available from companies such as Cytec Surface Specialties, Sartomer, Rahn, and BASF. Other examples of resins that may be employed include but are not limited to those disclosed in Yang (US Pub. App. 2007/ 0066698) and Olson (US Pub. Appl. 2009/0229747) the teachings of each are incorporated by reference herein by their entireity.

In some embodiments, UV curable resins that may be employed include but are not limited to epoxy vinyl ester resins such as bisphenol-epoxy vinyl ester resins such as Dion 9102-70 from Reichhold, bisphenol-A epoxy vinyl ester resins, bisphenol-F epoxy vinyl ester resins, phenol novolac epoxy vinyl ester resins, cresol-novolac epoxy vinyl ester resins, biphenyl epoxy vinyl ester resins, multi-functional epoxy vinyl ester resins (i.e. epoxy resins that have two or more epoxy groups), and naphthalene epoxy vinyl ester resins (e.g., EPICLON® EXA-4700 from Dainippon Ink and Chemicals).

Examples of other curable epoxy vinyl ester resins that may be employed include but are not limited to those disclosed in Yang (US Pub. App. 2007/ 0066698) and Olson (US Pub. Appl. 2009/0229747) the teachings of each are incorporated by reference herein by their entireity.

### UV Radiation Exposure

Upon exposure to a UV radiation source, the photoinitiator in the UV curable composition may dissociate to generate free radicals or acid to initiate curing of the UV curable monomer or resin without use of thermal energy from an external thermal source. The time of exposure to UV radiation and the intensity of the UV radiation may vary. In various embodiments, the time of exposure to UV radiation and/or the intensity of UV radiation is sufficient to initiate photocuring without use of a thermal imitator. In particular embodiments the time of exposure to UV radiation is about 1 second to about 5 hours, preferably about 5 seconds to about 1 hour at an intensity of about 0.01 W/cm² to about 0.1 W/cm², preferably about 0.03 W/cm² to about 0.06 W/cm². In some embodiments, exposure to UV radiation is at an intensity of about 0.043W/cm² for about 30 min.

In some embodiments the UV curable monomer or resin composition is exposed to UV radiation at an intensity and for a time sufficient to achieve complete curing, i.e., 90% or more curing of the monomer or resin. The UV radiation source may be turned off before complete curing of the resin is achieved. Advantageously, an additional thermal energy source need not be employed to cure the composition after UV radiation exposure is discontinued. The invention thereby enables use of an UV radiation source to achieve complete curing throughout the thickness of a composite layer, or layers without need for use of an additional thermal source to impart thermal heating, and significant reduction in energy usage and curing time.

### UV Radiation Source

A suitable UV radiation source for UV curing is capable of emitting UV radiation having a wavelength of about 100 to about 400 nanometers. Suitable sources include ultraviolet fluorescent lamps, metal halide UV lamps, ultraviolet light emitting diodes, ultraviolet light emitting lasers, mercury arcs, carbon arcs, low pressure mercury arcs, medium pressure mercury arcs, medium pressure mercury lamps, high pressure mercury lamps, swirling flow plasma arcs, mercury and metal halide arcs, ultraviolet light emitting diodes, ultraviolet light emitting lasers, and the like.

### UV Curing Procedures

The UV curing method disclosed herein may be used in a stage wise curing process to build up a cured thickness of cured composite as needed. For example, a first 5-ply thickness of composite laminate may be cured using the UV curing process disclosed herein. Then, a second 5-ply thickness of composite laminate is cured on top of the first cured 5-ply laminate to achieve a cured 10-ply cured composite. Stage wise curing process may be employed to achieve cured thicknesses of about ¼ in or more.

In FIG. 1, the UV cure manufacturing and repair system is generally referenced as 130. Like numerals refer to like elements throughout the several views. In FIG. 1, a stack 110 formed of about 5-10 of layers 112 of a UV curable composite material is positioned on substrate 101. One or more of the plurality of layers 112 of UV curable composite material include a fiber reinforced UV curable epoxy vinyl ester resin composite material. In a preferred aspect, the plurality of layers 112 of a composite material each include glass fiber reinforced epoxy vinyl ester UV curable resin photoinitiator composition that may be cured without a thermal initiator. An UV radiation source 132 is provided and positioned a distance "X" from uppermost layer 120 of stack 110 to achieve a desired intensity of UV exposure, typically about 0.03 W/cm² to about 0.06 W/cm². UV radiation source 132 may include a first UV radiation source 118 and a second UV radiation source 122 to initiate photocuring of the reactive group contained within the UV curable resin present in the plurality of layers of composite material 112. Radiation sources 118 and 122 may emit UV radiation at the same or different UV wavelengths. In the embodiment illustrated in FIG. 1, UV radiation sources 118 and 122 are each capable of emitting UV radiation at a wavelength of about 100 nanometers to about 400 nanometers. UV radiation sources 118 and 122 may include mercury and metal halide arc lamps, ultraviolet fluorescent lamps, ultraviolet light emitting diodes, ultraviolet light emitting lasers, and the like.

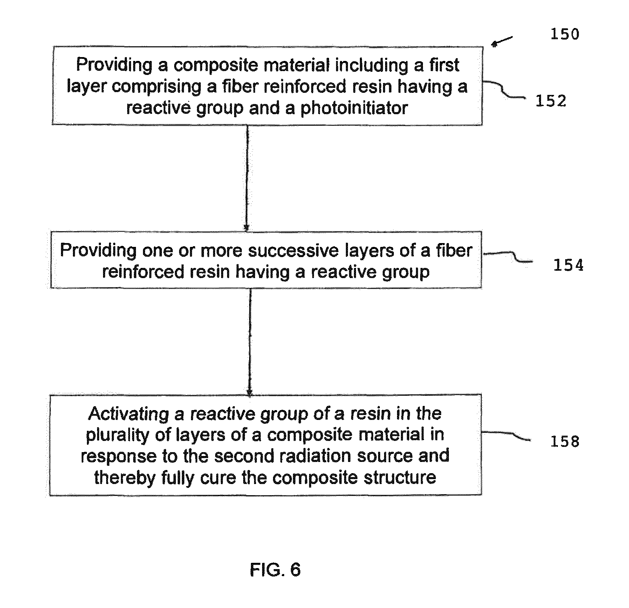

FIG. 6 illustrates a method 150 of curing a composite structure stack 110 in accordance with certain embodiments of the invention. Method 150 includes providing a composite material that includes a first layer of UV curable resin epoxy vinyl ester resin having a reactive group and a photoinitiator composition as in step 152. Method 150 includes providing one or more successive layers of a fiber reinforced resin having a reactive group as in step 154 until a desired number of layers in composite structure stack 110 are provided. Method 150 further include use of UV radiation to activate a UV curable epoxy vinyl ester monmer or a reactive group of a UV curable epoxy vinyl ester resin in one or more layers 112 of composite material in response to UV radiation source at step 158 to enable cure of one or more layers 112 of composite material. In method 150, radiation sources 118 and 122 may be activated sequentially or simultaneously. As a non-limiting illustration, where activation of the UV radiation sources is sequential, first radtion source 118 may be activated followed by activation of radtion source 122. Following activation of second radiation source 122 , first radiation source 118 may be turned off.

Stage wise curing may be used to achieve a desired thickness, typically about 0.25 in or more, of a composite structure. In stage wise curing, the UV cure process described above is repeated wherein a first set of layers of a composite material 112 is initially cured such as in accordance with method 150 and then an additional set of layers 112 of composite material is cured on top of the first set to achieve a desired thickness of composite structure.

Example 1: DION 9102-70 vinyl ester resin is mixed with 0.2% Co napthenate, and 0.6% IRIGACURE 819 where the amounts of Co napthenate and IRIGACURE 819 are based on the weight of DION 9102-70 to form a UV curable resin composition. The composition was placed in a metal can and sealed with a lid. The sealed container was then placed on a roll jar mill for mixing for one-hour prior to use. Then, five 0.025 inch thick plies of dry glass fabric were stacked to a thickness of 0.125 inch. The stack of fabric is infused with the UV curable resin using the VARTM process at room temperature at 14 psi for 5 min to form an infused layer. A nylon flow media and a Teflon peel ply were applied to the infused layers. Polyethylene tubes and spiral wraps were used as resin inlet and vacuum outlet, respectively during infusion. A vacuum level of 30 in-Hg was used with nylon bagging and tacky tape during infusion.

The infused fabric was cured with a UV-A lamp, 1000 KW from Sunrez Corp at an intensity of 0.04W/cm² for 30 minutes to produce a UV cured epoxy resin reinforced glass fiber panel. The composite panels had negligible void content (<0.5%). Then, five additional layers of dry glass fabrics of 0.025-inch thickness each were placed on top of the UV cured epoxy/glass panel. These additional layers were infused with the UV curable resin using the VARTM process and cured with UV-A lamp as above.

Example 2: The process of example 1 is repeated except that the mixture includes DION 9102-70 vinyl ester resin, 15%SR340, 0.2% Co napthenate, and 0.6 % IRIGACURE 819 where the amounts of SR340, Co napthenate, and IRIGACURE 819 are based on the weight of DION 9102-70.

### Comparative example 1

The process of example 1 is used except that only DION 9102-70 vinyl ester resin was employed.

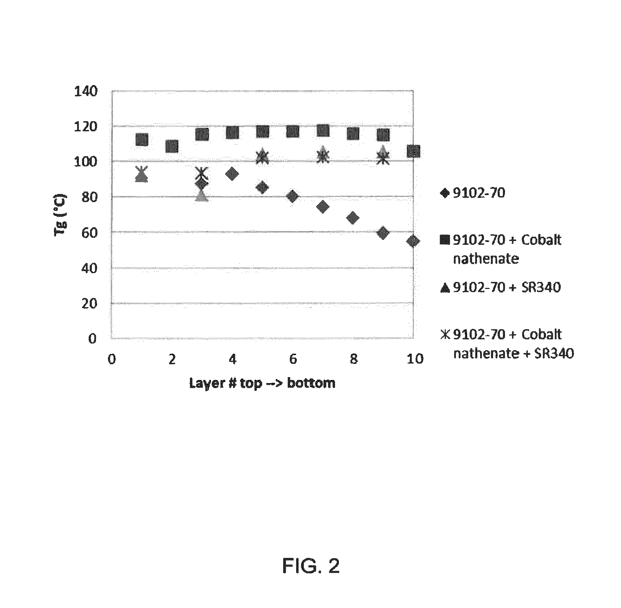

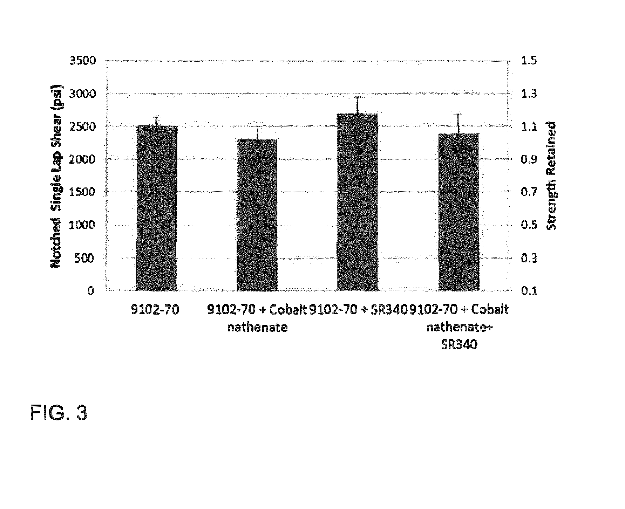

The results of examples 1 and 2, and of comparative example 1, are shown in Tables 1 and 2, and in FIGS. 2 and 3.

**Table 1**

| Layer No. From Top to Bottom | Dion 9102-70 & 0.6% Irgacure 819 & 15% SR340 | Dion 9102-70 & 0.6% 819 & 0.2% Co napthenate | Dion 9102-70 & 0.6% 819 & 0.2% Co napthenate & 15% SR 340 | Dion 9102-70 & 0.6% Irgacure 819 |
|---|---|---|---|---|
| 1 | Tg 1 92°C | Tg 112°C | Tg 94°C | Tg 87°C (combined 1, 2, 3 layers) |
| 3 | Tg 81°C | Tg 115°C | Tg 93°C | Tg 87°C |
| 5 | Tg 104°C | Tg 117°C | Tg 102°C | Tg 85°C |
| 7 | Tg 105°C | Tg 117°C | Tg 102°C | Tg 74°C |
| 9 | Tg 105°C | Tg 101°C | Tg 101°C | Tg 59°C |
| 10 | Not tested | Tg 105°C | Not tested | Tg 55°C |

| | | | | |
|---|---|---|---|---|
| 1. The onset of storage modulus, G', is used to determine the Tg from a Dynamic Mechanical Analysis curve. | | | | |

**Table 2**

| Samples | Dion 9102-70 & 0.6% Irgacure 819 & 0.2% Co napthenate | Dion 9102-70 & 0.6% Irgacure 819 & 15% SR340 | Dion 9102-70 & 0.6% 819 & 0.2% Co napthenate + 15% SR 340 | Dion 9102-70 & 0.6% Irgacure 819 |
|---|---|---|---|---|
| Notched single lap shear (ksi) 1 | 2.4 +/- 0.3 | 2.7 +/- 0.2 | 2.3 +/- 0.2 | 2.5 +/- 0.1 |

| | | | | |
|---|---|---|---|---|
| 1. Modified ASTM method D3165, a-c, 5-ply UV cured laminate on 5-ply thermal epoxy based substrate | | | | |

As shown in Table 1 and in FIGS 2 and 3, when the resin formulation contains vinyl ester resin (Dion 9102-70) alone, only a few top plies of the ten-ply stack reach a Tg above 80 °C. However, when the resin formulation is a UV curable resin formulation that contains vinyl ester resin (Dion 9102-70) in combination with Co napthenate and/or SR 340, each of the ten plies of the stack reach a Tg of 80°C to over 100 °C. Also, addition of cobalt napthenate and SR340 does not cause any significant reduction on the bonding strength with epoxy based composite substrate.

The UV curable manufacture and repair system and method disclosed herein may provide desirable strength and potential for adhesive bonds in composite structures that employ epoxy vinyl ester monomers and resins such as those described herein. Joining and assembling of piece-parts and subcomponents into monolithic structures with the UV curable resin formulation and system is particularly advantageous and useful for modular fabrication. Although both mechanical and adhesively bonded joints may be used, adhesive bonds generally provide for lower weight products together with a desirable strength. Composite structures that include epoxy vinyl ester monomers and resins may be used as materials in mechanical components that may be adhesively bonded during joining and assembling of mechanical components.

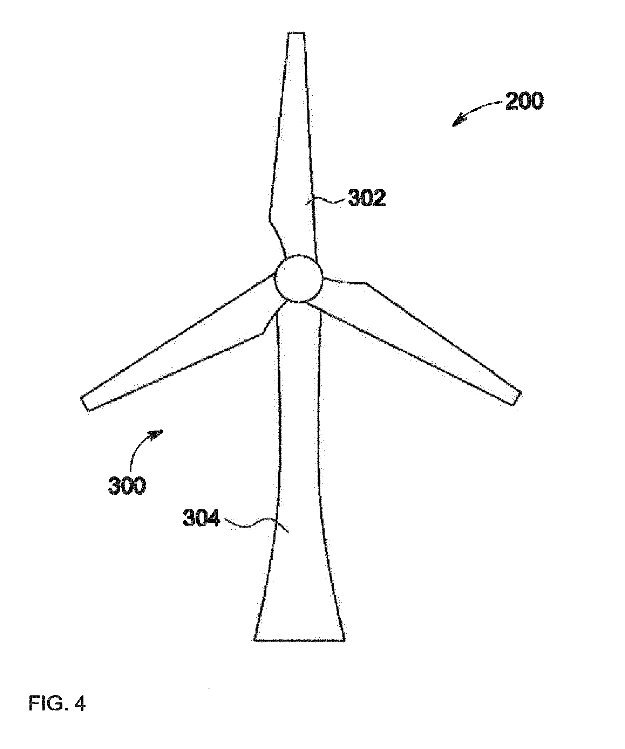

FIG. 4 is a diagrammatical illustration of an exemplary embodiment of a composite structure 200 illustrating a wind turbine system 300 that includes at least a portion manufactured or repaired in accordance with embodiments disclosed herein. Some of the characteristics that make composites produced from UV curable compositions such as those disclosed herfein that include reinforcing fibers, fillers or combinations thereof suitable for high stress applications such as wind turbine blades include mechanical properties, tailorability of material properties, and versatility of fabrication methods. The composites also provide desirable toughness and shorter process cycle time than existing manufacturing processes where thermal energy curing is employed.

The wind turbine system 300 shown in FIG. 4 includes a plurality of blades 302 (e.g., three blades) that enable system 300 to capture wind energy. Wind forces blades 302 to rotate about an axis to drive an electrical generator (not shown) disposed within system 300. Long blades are desirable since a long blade enables capture of higher amounts of wind energy.

In a non-limiting example of a wind turbine system 300, blades 302 have a typical length of about 30 meters to capture wind energy. Components of blade 302 may include the composite structure 110 as discussed below. Blades 302 are coupled to tower 304. The height of tower 304 determines the height of wind turbine system 300. Tower 304 is typically about two to three times the length of blades 302.

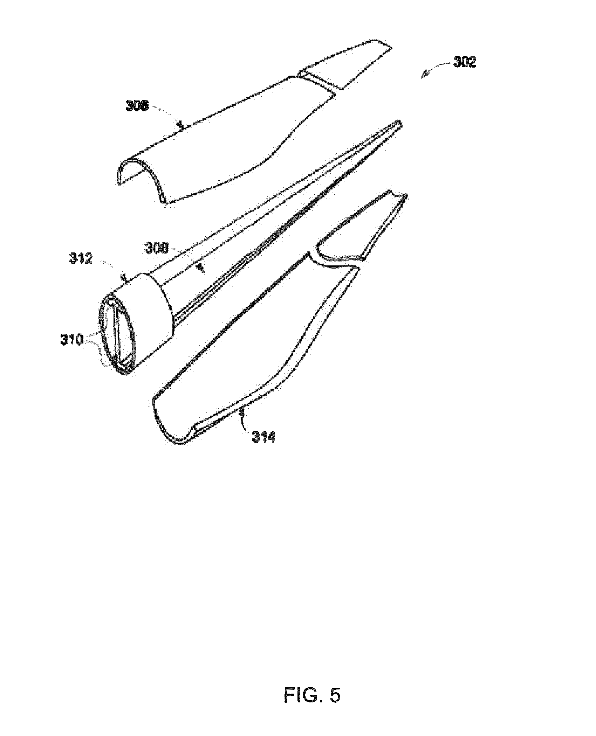

FIG. 5 illustrates a modular design of blade 302 referenced in FIG. 4 of a wind turbine system 300 in which at least a portion of blade 302 is manufactured or repaired in accordance with certain embodiments of the invention. Blade 302 includes a top skin 306 and a shear web 308 disposed between a pair of spar caps 310 that are coupled to barrel 312. Shear web 308 provides strength to blade 302 and also provides support to the pair of spar caps 310. Blade 302 further includes a bottom skin 314 disposed below shear web 308. Any one or more of parts shown in Fig. 5 may be manufactured or repaired according to the embodiments disclosed herein. Since blade 302 is a significant component of the wind turbine blade system 300, using a composite structure, such as composite structure 110 such as shown in FIG. 1, provides mechanical strength to turbine blade system 300, as well as a means of efficient and cost-effective repair and manufacture.

The UV curing system and method disclosed herein are suitable for manufacture and repair of composite parts such as wind blade manufacture and repair. The UV curing method disclosed herein provides for efficient, cost effective in-field repair, including up-tower repair of thick multilayer laminates without use of thermal initiators and/or heating steps that require additional thermal radiation sources.

The disclosed system and method of using UV radiation is suitable for curing glass fiber reinforced epoxy vinyl esters or epoxy vinyl ester laminates that include the UV cure composition disclosed herein. The UV radiation source can be configured as discrete stand-alone UV lamp or a plurality ofUV lamps. In addition, the UV curing method may be used as a stage wise curing process to build up thickness as needed.

A written description of the invention has been provided herein, however, the description is not intended to nor should be construed as placing limitations on modifications and changes that will occur to those skilled in the relevant art upon review of the description herein.

Various aspects and embodiments of the present invention are defined by the following numbered clauses:
1. A method of manufacture of a UV cured resin composite comprising:
   providing a UV curable composition comprising bisphenol-epoxy vinyl ester resin, Co napthenate, and a photoinitiator;
   infusing one or more plies of glass fabric with the UV curable composition to produce an UV resin infused fabric; and
   treating the infused fabric with UV radiation for a time period of about 1 second to about 5 hours at an intensity of about 0.01 W/cm² to about 0.1 W/cm² in the absence of thermal energy from an external thermal source to form a UV cured resin composite.
2. The method of clause 1, wherein time period is about 5 seconds to about 1 hour and the intensity is about 0.043W/cm².
3. The method of any preceding clause, wherein the photoinitiator is 2,2-dimethoxy-2-phenyl acetophenone.
4. The method of any preceding clause, wherein the mixture further comprises phenoxyethyl methacrylate.
5. A method of manufacture of a UV cured resin composite comprising:
   providing a UV curable composition comprising epoxy vinyl ester resin;
   an accelerator is selected from the group consisting of cobalt napthenate, cobalt octoate dimethylaniline, diethylaniline and mixtures thereof;
   a photoinitiator selected from the group consisting of quinones, benzophenones, nitroso compounds, acryl halides, hydrazones, mercapto compounds, pyrylium compounds, triacrylimidazoles, bisimidazoles, chloroalkyltriazines, benzoin ethers, benzil ketals, thioxanthones, acetophenones, acylphosphine oxides, derivatives of the aforementioned compounds, and mixtures thereof;
   infusing one or more plies of reinforcement wherein the reinforcement is any one or more of carbon fabric, glass fabric and filler with the UV curable composition to produce an UV resin infused preform; and
   treating the infused preform with UV radiation for a time period of about 1 second to about 5 hours at an intensity of about 0.01 W/cm² to about 0.1 W/cm² in the absence of thermal energy from an additional thermal source to form a UV cured resin composite.
6. The method of any preceding clause, wherein the composition further comprises an alkyl phenoxy methacrylate.
7. The method of any preceding clause, wherein the alkyl phenoxy methacrylate is selected from the group consisting of phenoxyethyl methacrylate, butanediol dimethacrylate, neopentyl glycol dimethacrylate, ethoxylated bisphenol A dimethacrylate, hexanediol dimethacrylate and mixtures thereof.
8. A method of manufacture of a UV cured resin composite comprising, providing a UV curable composition a vinyl ester resin, a metal carboxylate accelerator, an adhesion promoter, and a photoinitiator.
9. The method of any preceding clause, wherein the photoinitiator is trialkyl substituted benzoyl substituted aromatic phosphine oxide.
10. A UV curable composition capable of curing under UV radiation in the absence of thermal radiation from an additional thermal source wherein the UV curable compositon comprises a vinyl ester resin, accelerator, an adhesion promoter, and a photoinitiator.
11. The composition of any preceding clause, wherein the accelerator is selected from the group consisting of cobalt carboxylates, aromatic amines and mixtures threof.
12. The composition of any preceding clause, wherein the cobalt carboxylage is selectd from the group consisitng of cobalt napthenate, cobalt octoate and mixtures thereof and the aromatic amine is selected from the group consisting of dimethylaniline, diethylaniline and mixtures thereof.
13. The composition of any preceding clause, wherein the vinyl ester resin comprises a bisphenol-epoxy vinyl ester resin.
14. The composition of any preceding clause, wherein the vinyl ester resin comprises any one or more of a multifunctional epoxy vinyl ester resins and multi-aromatic epoxy resins.
15. The compositon of any preceding clause, wherein the vinyl ester resin futher comprises cycloaliphatic epoxide resins, bisphenol-A epoxy vinyl ester resins, bisphenol-F epoxy vinyl ester resins, phenol novolac epoxy vinyl ester resins, cresol-novolac epoxy vinyl ester resins, biphenyl epoxy vinyl ester resins, naphthalene epoxy vinyl ester resins, divinylbenzene dioxide, 2-glycidylphenylglycidyl ether and mixtures thereof.
16. A method manufacture of a multilayer UV cured resin composite comprising:
   a first step of providing a first set of one or more layers comprising a UV curable resin composition having reinforcement, a reactive group, photoinitiator and accelerator wherein the UV curable resin is curabable in the presence of UV radiation and in the absence of thermal energy from an additional thermal energy source;
   a second step of applying UV radiation to the first set to to cure the first set in the absence of thermal energy from an additional thermal source to form a cured first set of layers;
   a third step of providing additional layers of the reinforced UV curable esin over the cured first set;
   repeating the second and third steps to produce a multilayer UV cured resinforced resin compositge desired thickness.
17. The method of any preceding clause, wherein the UV radiation has a wavelength of about 100 nm to about 400 nm.
18. The method of any preceding clause, wherein the UV radiation is at an intensity of about 0.03 W/cm² to about 0.06 W/cm²
19. The method of any preceding clause, wherein the applying of UV radiation is for a time of about 1 second to about 5 hours.
20. The method of any preceding clause, wherein the UV reinforcement is any one or more of fibers, fillers, and mixtures thereof wherein the filbers are selected from the group consisting of glass fibers, quartz fibers, alumina fibers, zirconia fibers and mixtures thereof, and the fillers are selected from the group consisitng of glass, quartz, silica, fumed silica, alumina, zirconia and mixtures thereof.

## Claims

1. A method (150) of manufacture of a UV cured resin composite (112) comprising:
providing a UV curable composition comprising bisphenol-epoxy vinyl ester resin, Co napthenate, and a photoinitiator;
infusing one or more plies of glass fabric with the UV curable composition to produce an UV resin infused fabric; and
treating the infused fabric with UV radiation for a time period of about 1 second to about 5 hours at an intensity of about 0.01 W/cm² to about 0.1 W/cm² in the absence of thermal energy from an external thermal source to form a UV cured resin composite (112).

2. The method (150) of claim 1, wherein time period is about 5 seconds to about 1 hour and the intensity is about 0.043 W/cm².

3. The method (150) of any preceding claim, wherein the photoinitiator is 2,2-dimethoxy-2-phenyl acetophenone.

4. The method (150) of any preceding claim, wherein the mixture further comprises phenoxyethyl methacrylate.

5. A method (150) of manufacture of a UV cured resin composite (112) comprising:
providing a UV curable composition comprising epoxy vinyl ester resin;
an accelerator is selected from the group consisting of cobalt napthenate, cobalt octoate dimethylaniline, diethylaniline and mixtures thereof;
a photoinitiator selected from the group consisting of quinones, benzophenones, nitroso compounds, acryl halides, hydrazones, mercapto compounds, pyrylium compounds, triacrylimidazoles, bisimidazoles, chloroalkyltriazines, benzoin ethers, benzil ketals, thioxanthones, acetophenones, acylphosphine oxides, derivatives of the aforementioned compounds, and mixtures thereof;
infusing one or more plies of reinforcement wherein the reinforcement is any one or more of carbon fabric, glass fabric and filler with the UV curable composition to produce an UV resin infused preform; and
treating the infused preform with UV radiation for a time period of about 1 second to about 5 hours at an intensity of about 0.01 W/cm² to about 0.1 W/cm² in the absence of thermal energy from an additional thermal source to form a UV cured resin composite.

6. The method (150) of claim 5, wherein the composition further comprises an alkyl phenoxy methacrylate.

7. The method (150) of claim 5 or claim 6, wherein the alkyl phenoxy methacrylate is selected from the group consisting of phenoxyethyl methacrylate, butanediol dimethacrylate, neopentyl glycol dimethacrylate, ethoxylated bisphenol A dimethacrylate, hexanediol dimethacrylate and mixtures thereof.

8. A method (150) of manufacture of a UV cured resin composite comprising, providing a UV curable composition a vinyl ester resin, a metal carboxylate accelerator, an adhesion promoter, and a photoinitiator.

9. The method (150) of claim 8, wherein the photoinitiator is trialkyl substituted benzoyl substituted aromatic phosphine oxide.

10. A UV curable composition (112) capable of curing under UV radiation in the absence of thermal radiation from an additional thermal source wherein the UV curable compositon comprises a vinyl ester resin, accelerator, an adhesion promoter, and a photoinitiator.

11. The composition (112) of claim 10, wherein the accelerator is selected from the group consisting of cobalt carboxylates, aromatic amines and mixtures threof.

12. The composition (112) of claim 10 or claim 11, wherein the cobalt carboxylage is selected from the group consisitng of cobalt napthenate, cobalt octoate and mixtures thereof and the aromatic amine is selected from the group consisting of dimethylaniline, diethylaniline and mixtures thereof.

13. The composition (112) of any of claims 10 to 12, wherein the vinyl ester resin comprises a bisphenol-epoxy vinyl ester resin.

14. The composition (112) of claim 13, wherein the vinyl ester resin comprises any one or more of a multifunctional epoxy vinyl ester resins and multi-aromatic epoxy resins.

15. The composition (112) of claim 13 or claim 14, wherein the vinyl ester resin futher compreises cycloaliphatic epoxide resins, bisphenol-A epoxy vinyl ester resins, bisphenol-F epoxy vinyl ester resins, phenol novolac epoxy vinyl ester resins, cresol-novolac epoxy vinyl ester resins, biphenyl epoxy vinyl ester resins, naphthalene epoxy vinyl ester resins, divinylbenzene dioxide, 2-glycidylphenylglycidyl ether and mixtures thereof.
